# EUROPÄISCHE PATENTSCHRIFT

(11) **EP 1 325 248 B1**
(45) Veröffentlichungstag und Bekanntmachung des Hinweises auf die Patenterteilung: **09.02.2005**
(21) Anmeldenummer: 01978358.8
(22) Anmeldetag: 12.09.2001
(51) Int. Cl.: F16H 47/02

(54) **GETRIEBESYNTHESE MIT STUFENLOSEN UND KONSTANTEN GETRIEBEMODULEN**
GEAR SYNTHESIS WITH INFINITELY VARIABLE AND CONSTANT GEARBOX MODULES
SYNTHESE DE BOITE DE VITESSES COMPRENANT DES MODULES DE BOITE A ETAGEMENT CONTINU ET A ETAGEMENT CONSTANT

(30) Priorität: 26.09.2000 DE 10047398
(43) Veröffentlichungstag der Anmeldung: 09.07.2003
(60) Teilanmeldung: 04105398.4
(73) Patentinhaber: DEERE & COMPANY, Moline, Illinois 61265-8098 (US)
(72) Erfinder: OTTEN, Ulrich, 67346 Speyer (DE); FREUND, Ralf-R., 68723 Schwetzingen (DE)
(74) Vertreter: Lau-Loskill, Philipp, Dipl.-Phys.
(86) Internationale Anmeldenummer: PCT/EP2001/010509
(87) Internationale Veröffentlichungsnummer: WO 2002/027213

(56) Entgegenhaltungen:
- EP-A- 0 465 752
- DE-A- 4 206 086
- US-A- 5 695 422
- US-A- 5 768 955

## Beschreibung

Die Erfindung betrifft eine Getriebesynthese mit einem stufenlos verstellbaren Getriebeteil und einem konstanten Getriebeteil. Das Übersetzungsverhältnis des stufenlos verstellbaren Getriebeteils lässt sich innerhalb bestimmter Grenzen stufenlos in Vorwärts- und gegebenenfalls auch in Rückwärtsrichtung verstellen, während sich das Übersetzungsverhältnis des konstanten Getriebeteils nicht oder nur in festen Stufen verstellen lässt.

Eine Getriebesynthese der eingangs genannten Art ist beispielsweise aus DE 42 06 086 A1 bekannt, welche ein modular aufgebautes Antriebssystem beschreibt. Als variabel verstellbares Getriebeteil ist wahlweise ein Elektromotor oder ein hydraulischer Motor vorgesehen. Als konstantes Getriebeteil ist wahlweise ein Nabenabtrieb oder ein Wellenabtrieb vorgesehen.

In der Nutzfahrzeugindustrie finden neben Antrieben mit konventionellen Schaltgetrieben stufenlose Antriebskonzepte Anwendung. Dabei werden auch leistungsverzweigte Getriebe eingesetzt, die den hohen Anforderungen an eine günstige Verlustleistung für ein stufenloses Getriebe gerecht werden. Bei den leistungsverzweigten Getrieben wird ein Teil der Leistung des Verbrennungsmotors über einen stufenlosen Getriebezweig und ein anderer Teil der Leistung über einen konstanten, mechanischen Getriebezweig geführt. Beide Leistungsflüsse werden nach Durchlaufen der Getriebezweige wieder zusammengeführt und überlagert und dann über mechanische Antriebselemente zu den Rädern des Fahrzeugs weitergeleitet.

Es ist bekannt, den stufenlosen Getriebezweig beispielsweise als hydrostatisches Getriebe, als Toroid-Getriebe, als Kettengetriebe oder als elektrisches Getriebe auszuführen, während der konstante Getriebezweig als Planetengetriebe mit integrierten Schaltstufen ausgebildet sein kann. Hier sind eine Vielzahl von Kombinationen und Varianten in der Fachwelt bekannt.

Im Traktorenbau werden als stufenlose Antriebe hydrostatisch-mechanische leistungsverzweigte Getriebe verwendet. Ein leistungsverzweigtes Getriebe ist beispielsweise aus der EP-A-0 465 752 bekannt. Die im Traktorenbau verwendeten leistungsverzweigten Getriebe haben jedoch eine Reihe von Nachteilen: Ihre Herstellungskosten liegen insbesondere wegen der hohen Anzahl der Bauteile und der Variantenvielzahl wesentlich höher als die Kosten üblicher Teillast- oder Vollastgetriebe. Der Markt fordert viele Getriebevarianten, die unterschiedliche Leistungsanforderungen und Anwendungsfälle abdecken sollen. Hierfür werden jeweils komplette neue Getriebe notwendig, da eine Variantenbildung mit bekannten Getriebebausteinen nicht möglich ist. Die nutzbaren Geschwindigkeitsbereiche werden auf Gruppen verteilt, welche nur im Stillstand zu schalten oder in nahtlos zu schaltende Bereiche aufgeteilt sind. Die nahtlosen Schaltstellen liegen dabei im Hauptarbeitsbereich des Traktors, in dem die Schaltübergänge unangenehm zu verspüren sind.

Die der Erfindung zugrunde liegende Aufgabe wird darin gesehen, eine Getriebesynthese mit einem stufenlos verstellbaren Getriebeteil und einem konstanten Getriebeteil bereitzustellen, durch welches die vorgenannten Probleme überwunden werden. Insbesondere soll es möglich sein, eine große Anzahl unterschiedlicher Getriebevarianten bereitzustellen. Die Getriebe sollen unterschiedlichen Leistungsanforderungen und Einsatzfällen gerecht werden, optimale Wirkungsgrade im Hauptarbeitsbereich sowie einen hohen Gesamtwirkungsgrad über den gesamten Geschwindigkeitsbereich ermöglichen, kostengünstig herstellbar sein, eine geringe Anzahl von unterschiedlichen Bauteilen erfordern, sich einfach montieren und unspürbar schalten lassen.

Die Aufgabe wird erfindungsgemäß durch die Lehre des Patentanspruchs 1 oder 18 gelöst. Weitere vorteilhafte Ausgestaltungen und Weiterbildungen der Erfindung gehen aus den Unteransprüchen hervor. Die Lösung bringt die aus der Aufgabenstellung resultierenden Vorteile mit sich.

Die erfindungsgemäße Getriebesynthese enthält einen stufenlos verstellbaren Getriebeteil und einen konstanten Getriebeteil. Die Getriebeteile sind modular als vormontierbare Einheiten ausgebildet, die sich wahlweise zu Gesamtgetrieben zusammensetzen lassen. Das stufenlose Getriebemodul ist eine für sich abgeschlossene funktionsfähige Getriebeeinheit mit einem Verstellgetriebegehäuse, welches zu wenigstens einer Seite offenen ist und hier einen Flansch enthält. Der Flansch dient der wahlweisen Befestigung konstanter Getriebemodule unterschiedlicher Leistungsklassen und/oder unterschiedlicher Schaltstufen. Innerhalb des Flanschbereichs erstreckt sich wenigstens eine stufenlos verstellbare Ausgangswelle des stufenlosen Getriebemoduls.

Das stufenlos verstellbare Getriebemodul kann an seiner Ausgangswelle stufenlos einstellbare Drehzahlen abgeben, und zwar vorzugsweise für beide Drehrichtungen. Als konstante Getriebemodule kommen unterschiedlich ausgebildete Getriebekomponenten mit unterschiedlichen Schaltstufen in Betracht, die jeweils eine mechanische Umschaltung zwischen mehreren Gängen und/oder Gruppen erlauben und gegebenenfalls eine Reversiereinheit enthalten.

Erfindungsgemäß lassen sich identische stufenlos verstellbare Getriebemodule mit einer Vielzahl unterschiedlicher konstanter Getriebemodule kombinieren und zu einer Getriebebaureihe mit Getrieben unterschiedlicher Leistungsklassen zusammenstellen. Die konstanten Getriebemodule sind dabei auf unterschiedliche Leistungen ausgelegt und/oder weisen unterschiedliche Schaltstufenzahlen auf. Je höher die Eingangsnennleistung des Getriebezusammenbaus ist, desto höhere Schaltstufenzahlen des konstanten Getriebemoduls werden gewählt.

Es ist von besonderem Vorteil, stufenlose Getriebemodule auf bestimmte Leistungen auszulegen, so dass sie den maximal zu erwartenden Leistungsanforderungen einer Getriebereihe gerecht werden. Damit können die Schaltstufenzahl der konstanten Getriebe und die Verlustleistung des Gesamtgetriebes gering gehalten werden. Zwar ist die Herstellung größerer stufenloser Getriebemodule kostspieliger als die Herstellung kleinerer Module, dies wird jedoch durch die Vielseitigkeit des Einsatzes und die damit verbundene erhebliche Steigerung der Herstellungsstückzahlen mehr als kompensiert. Die Größe des stufenlosen Getriebes kann durch den zur Verfügung stehenden Bauraum begrenzt sein.

Das stufenlos verstellbare Getriebemodul ist auf eine bestimmte Leistungsübertragung ausgelegt (z. B. auf 200 kW für einen Ackerschlepper). Durch die Gestaltung des konstanten Getriebemoduls mit ein, zwei, drei oder mehr Übersetzungsverhältnissen (Gänge und/oder Gruppen) läßt sich das stufenlose Getriebemodul an die verschiedenen Leistungsklassen einer Traktorenserie anpassen. Damit kann immer dasselbe stufenlose Getriebemodul in allen Leistungsklassen verwendet werden. Dies ist möglich, da mit zunehmender Anzahl von Gängen und/oder Gruppen der konstanten Getriebemodule die Leistung im stufenlosen Getriebemodul gleich bleibt. Das bedeutet, dass für Fahrzeug mit kleiner Leistung das konstante Getriebemodul lediglich mit einem oder wenigen Gängen und/oder Gruppen ausgeführt ist. Beim Übergang zu einem Fahrzeug mit der nächst größeren Leistungsklasse wird jeweils ein Gang oder eine Gruppe in das konstante Getriebemodul hinzugefügt.

Die erfindungsgemäße Getriebebaureihe enthält lediglich ein einziges stufenlos verstellbares Getriebemodul, das sich unverändert für eine große Bandbreite von Fahrzeugklassen einsetzen lässt. Dies ermöglicht einen stark modular ausgebildeten Aufbau und stellt eine hohe Optionsvielfalt für den Kunden mit entsprechend günstiger Kostenstruktur zur Verfügung. Durch die Vereinheitlichung von Getriebekomponenten sowie den modularen Aufbau lassen sich die Anzahl unterschiedlicher Bauteile und die Herstellungskosten so weit senken, dass sie den Kosten herkömmlicher Teillastgetrieben in kleinen und mittleren Fahrzeugleistungsklassen und denen von Volllastgetrieben größerer Fahrzeugleistungsklassen entsprechen bzw. kostengünstiger sind. Die erfindungsgemäße Getriebesynthese bzw. Getriebebaureihe ermöglicht eine sehr einfache Montage und Demontage der Module. Sie weist beste Wirkungsgrade in den Hauptarbeitsbereichen des Nutzfahrzeugs auf und hat einen hohen Gesamtwirkungsgrad über den gesamten Geschwindigkeitsbereich.

Eine Getriebeeingangswelle tritt auf der dem Flansch gegenüberliegenden Seite des stufenlosen verstellbaren Getriebemoduls eine die mit einem Verbrennungsmotor verbindbar ist, in das Verstellgetriebegehäuse ein und erstreckt sich durch das stufenlose Getriebemodul. An dem Flansch kann das konstante Getriebemodul befestigt sein, so dass dieses räumlich dem stufenlosen Getriebemodul nachgeordnet ist. Vorzugsweise fluchten der stufenlose Getriebezweig und der konstante Getriebezweig miteinander und liegen in axialer Richtung hintereinander. Die Getriebeeingangswelle kann gleichzeitig als Ausgangswelle genutzt werden, die mechanische Antriebsleistung des Verbrennungsmotors unmittelbar für das konstante Getriebemodul bereitstellt.

Die Getriebeeingangswelle dient sowohl als Eingangswelle für das stufenlose Getriebemodul als auch als Eingangswelle für das konstante Getriebemodul. Sie kann auch mit einem Nebenantrieb, beispielsweise mit einer Zapfwelle des Arbeitsfahrzeugs, antriebsmäßig verbunden sein.

Ein einfacher Getriebeaufbau ergibt sich durch eine bevorzugte Weiterbildung der Erfindung, der zufolge sich von der Eingangsseite zur Ausgangsseite jedes Getriebemoduls ein Wellenabschnitt erstreckt. Die Wellenabschnitte fluchten im zusammengebauten Zustand der Getriebemodule miteinander und sind antriebsmäßig miteinander verbunden. Sie dienen als Eingangswelle für das jeweilige Getriebemodul und/oder als Antriebswelle für einen Nebenantrieb.

Es ist von Vorteil, wenn sich innerhalb des Flanschbereichs des stufenlosen Getriebemoduls zusätzlich zur stufenlos verstellbaren Ausgangswelle auch wenigstens eine konstante Ausgangswelle erstreckt, die mit einer Eingangswelle des konstanten Getriebemoduls antriebsmäßig verbunden ist und mit dieser fluchtet oder parallel zu dieser verläuft. Die konstante Ausgangswelle dient dem Antrieb eines dem verstellbaren Getriebemodul nachgeordneten konstanten Getriebemoduls. Mit konstante Welle werden solche Wellen bezeichnet, deren Drehzahl in festen Übersetzungsverhältnissen zu der Drehzahl einer Eingangswelle stehen, während die Drehzahl einer stufenlos verstellbarer Welle innerhalb bestimmter Grenzen in beliebigen Übersetzungsverhältnissen zur Drehzahl der Eingangswelle einstellbar ist.

Vorzugsweise verläuft wenigstens eine stufenlos verstellbare Ausgangswelle des verstellbaren Getriebemoduls parallel versetzt zur Getriebeeingangswelle oder als Hohlwelle konzentrisch zu einer mechanisch angetriebenen konstanten Ausgangswelle des verstellbaren Getriebemoduls.

Als stufenlos verstellbare Getriebemodule kommen grundsätzlich alle stufenlosen Getriebe in Betracht. Es kann beispielsweise als Toriodmodul oder als elektrisches Modul ausgelegt sein. Gemäß einer bevorzugten Ausgestaltung der Erfindung ist das stufenlose Getriebemodul jedoch ein Hydrostatmodul, welches zwei Hydrostaten mit parallel zueinander ausgerichteten Wellen enthält. Als besonders geeignet werden Schrägachsenmaschinen angesehen, die einen großen Schwenkwinkel und ein großes Fördervolumen aufweisen. Sie ermöglichen eine kompaktere Bauweise als Schrägscheibenmaschinen.

Einer der Hydrostaten ist eine Verstellpumpe, während der andere Hydrostat ein Konstantmotor oder ein Verstellmotor ist. Die Hydrostaten sind über Lagerungen ihrer Wellen an einer Montageplatte befestigt. Vorzugsweise ist wenigstens eine hydrostatisch angetriebene Ausgangswelle des Hydrostatmoduls als Hohlwelle ausgebildet, durch die sich konzentrisch eine konstante Ausgangswelle des Hydrostatmoduls erstreckt. Eine bevorzugte Hydrostateinheit ist in der nachveröffentlichten deutschen Patentanmeldung, die das Aktenzeichen 100 47 402.0 trägt, näher beschrieben, auf deren Offenbarung hiermit Bezug genommen wird.

Um die Hydrostateinheit als für sich funktionsfähige und testbare Getriebeeinheit auszubilden, ist es zweckmäßig, an dem Hydrostatmodulgehäuse ein Ventilgehäuse zu montieren, welches der Ölversorgung der Hydrostateinheit dient. Das Ventilgehäuse wird aus Platzgründen vorzugsweise auf der dem Flansch abgewandten Stirnseite an dem Hydrostatmodulgehäuse befestigt.

Das Ventilgehäuse nimmt z. B. eine Ölpumpe und verschiedene Ventile für unterschiedlich einstellbare Systemdrücke auf. Es kann auch einen Ölfluß zur Schmierung und Kühlung von Getriebebauteilen bereitstellen. Das Ventilgehäuse kann ein Ölfilter und verschiedene Sensoren zur Druck-, Temperatur- und Mengendurchflussmessung aufnehmen.

Gemäß einer bevorzugten Ausgestaltung der Erfindung enthält das konstante Getriebemodul ein Summierungsgetriebe, welches die Ausgangsleistung einer stufenlos, insbesondere hydrostatisch, angetriebenen Ausgangswelle des verstellbaren Getriebemoduls mit der Ausgangsleistung einer konstanten Ausgangswelle des verstellbaren Getriebemoduls kombiniert. Die Getriebesynthese kann dabei nach Art eines stufenlos hydro-mechanischen Leistungsverzweigungsgetriebe für Arbeitsfahrzeuge ausgebildet sein, bei dem die Eingangswellenleistung auf einen stufenlosen Getriebeteil und einen konstanten Getriebeteil aufgeteilt wird und wobei die Ausgangswellenleistungen der beiden Getriebeteile in einem Summierungsgetriebe zusammengefaßt werden. Das Summierungsgetriebegehäuse weist einen an den Flansch des Verstellgetriebegehäuses angepassten Eingangsflansch auf.

Es wird als besonders vorteilhaft angesehen, dem stufenlosen Getriebemodul ein Planetengetriebemodul mit einem an den Flansch des Verstellgetriebegehäuses angepassten Eingangsflansch nachzuordnen. Das Planetengetriebemodul kann als sogenannte Planetenwalze ausgebildet sein, die aus mehreren räumlich hintereinander geschalteten Planetengetrieben besteht, von denen wenigstens eines ein Summierungsgetriebe ist.

Es ist zweckmäßig, eine oder mehrere der hintereinander angeordneten Planetengetriebe als Umschaltgetriebe auszubilden, die das konstante Getriebemodul bilden und ein, zwei, drei oder vier umschaltbare Übersetzungsverhältnisse und/oder eine Reversiereinheit bereitstellen. Für die Umschaltung zwischen den Übersetzungsverhältnissen sind auf übliche Weise Kupplungen und Bremsen vorgesehen. Vorzugsweise ist das Planetengetriebemodul derart ausgelegt, dass seine Ausgangswelle Drehmomente in beiden Drehrichtungen abgeben kann. In das Planetengetriebe kann auch eine Fahrkupplung integriert sein.

Der konstante Getriebemodul kann aus einem Bauteil aber auch aus mehreren hintereinander angeordneten Getriebeeinheiten bestehen. Er kann beispielsweise aus einem Summierungsgetriebemodul und einem Gruppenmodul bestehen. Die Module sind gesonderte, für sich funktionsfähige Getriebeeinheiten, die über Flansche miteinander verbindbar und in axialer Richtung hintereinander angeordnet sind.

Das konstante Getriebemodul weist zweckmäßiger Weise einen Eingangsflansch und einen Ausgangsflansch auf, die sich an gegenüberliegenden Seiten des Getriebegehäuses befinden. An den Ausgangsflansch sind wahlweise weitere konstante Getriebemodule unterschiedlicher Leistungsklassen und/oder unterschiedlicher Leistungsstufen befestigbar.

Vorzugsweise ist ein solches weiteres konstantes Getriebemodul als Gruppenmodul mit mindestens einer Gruppe ausgebildet. Das Gruppenmodul ist mit einem Eingangsflansch an einen Ausgangsflansch eines vorgeschalteten konstanten Getriebemoduls, insbesondere eines Summierungsgetriebegehäuses oder eines Planetengetriebemoduls, anschließbar. Seine Antriebswelle ist mit einer Ausgangswelle des vorgeschalteten konstanten Getriebemoduls antriebsmäßig verbunden. Die Getriebesynthese enthält zweckmäßiger Weise drei Getriebemodule: ein stufenloses Getriebemodul, das als Hydrostateinheit ausgebildet ist, ein erstes konstantes Getriebemodul nach Art eines Planetengetriebemoduls mit Summierungsteil und gegebenenfalls mit Gangschaltteil und ein zweites konstantes Getriebemodul, das als Gruppengetriebemodul ausgebildet ist.

Wenn es die Fertigungsmöglichkeiten wirtschaftlich zulassen, können die Gehäuse des ersten konstanten Getriebemoduls und des zweiten als Gruppenmodul ausgebildeten konstanten Getriebemoduls als ein gemeinsames Gehäuseteil ausgebildet sein. Es entsteht dabei ein Gehäuseteil, welches an beiden Enden offen ist und in der Mitte eine Trennwand hat, die der Abstützung der Getriebewellen dient. Außerdem weist das Gehäuseteil zwei Flansche auf, wobei der Eingangsflansch mit einem Ausgangsflansch des stufenlosen Getriebemoduls verbunden ist und der andere Flansch als Ausgangsflansch mit einem Differential- oder mit einem Hinterachsgehäuse eines Fahrzeugs verbindbar ist.

Es ist auch von Vorteil zwischen zwei Getriebeteilen eine Trennwand auszubilden, die einen Schmiermitteldurchtritt verhindert. Auf diese Weise lassen sich Getriebeteile miteinander verwenden, die unterschiedliche Anforderungen an die Schmiermittelqualität stellen. Die Trennwand kann beispielsweise einen ersten Getrieberaum, in dem die Hydrostateinheit mit ihren hohen Anforderungen an das Schmiermittel liegt, von einem zweiten Getrieberaum trennen, welcher mechanische Getriebekomponenten mit geringeren Anforderungen an das Schmiermittel aufnimmt.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Querschnittsansicht des Gehäuses eines stufenlos verstellbaren Getriebemoduls,
- Fig. 2: die schematische Querschnittsansicht des Gehäuses eines ersten konstanten Getriebemoduls,
- Fig. 3: die schematische Querschnittsansicht eines zweiten konstanten Getriebemoduls,
- Fig. 4: die schematische Querschnittsansicht des gemeinsamen Gehäuses für zwei konstante Getriebeeinheiten,
- Fig. 5: eine erste erfindungsgemäße Getriebesynthese,
- Fig. 6: eine zweite erfindungsgemäße Getriebesynthese,
- Fig. 7: eine dritte erfindungsgemäße Getriebesynthese,
- Fig. 8: eine vierte erfindungsgemäße Getriebesynthese,
- Fig. 9: eine fünfte erfindungsgemäße Getriebesynthese,
- Fig. 10: eine sechste erfindungsgemäße Getriebesynthese,
- Fig. 11: eine siebente erfindungsgemäße Getriebesynthese und
- Fig. 12: eine achte erfindungsgemäße Getriebesynthese.

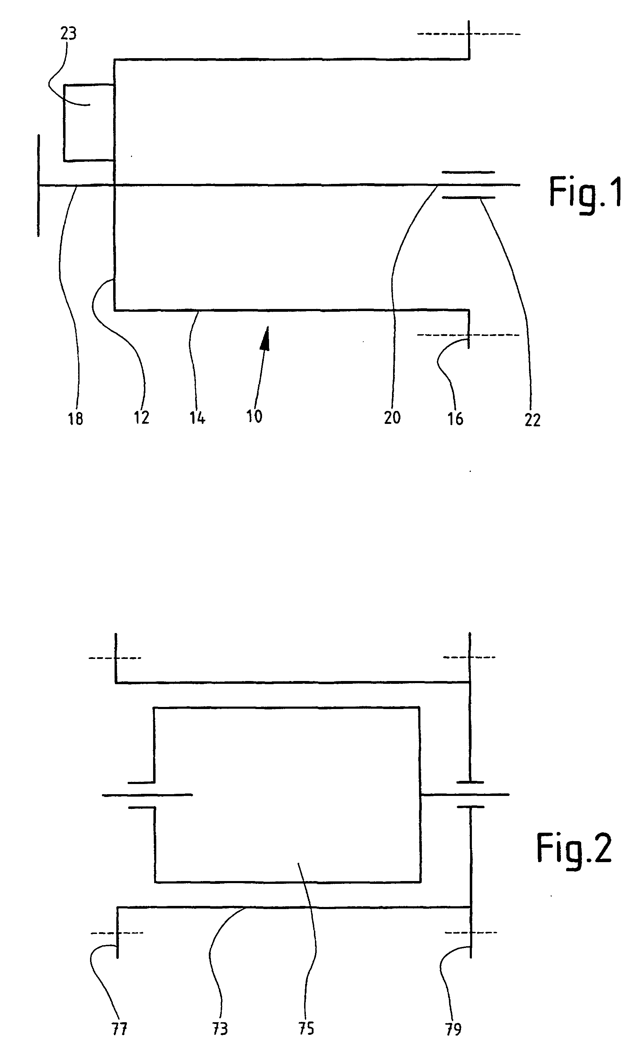

In Fig. 1 ist schematisch ein Getriebegehäuse 10 dargestellt, welches der Aufnahme einer Hydrostateinrichtung dient und mit diesem ein stufenlos verstellbares Getriebemodul bildet. Das Getriebegehäuse 10 ist im wesentlichen topfförmig ausgebildet. Es hat einen Bodenbereich 12, einen im wesentlichen zylindrischen Mantelbereich 14 und auf der Gehäuseseite, die dem Bodenbereich 12 gegenüberliegt, einen Ausgangsflansch 16, der der Befestigung eines benachbarten Getriebemoduls dient. Es ist eine Eingangswelle 18 angedeutet, die mit der Ausgangswelle eines nicht gezeigten Verbrennungsmotors verbindbar ist und zentral durch das Getriebegehäuse 10 verläuft. Innerhalb des Flanschbereichs erstreckt sich eine konstante Ausgangswelle 20, die mit der Eingangswelle 18 fluchtet und mit dieser drehfest verbunden ist, und eine konzentrisch zur konstanten Ausgangswelle 20 verlaufende als Hohlwelle ausgebildete stufenlos verstellbare Ausgangswelle 22, deren Drehzahl durch die in dem Getriebegehäuse 10 angeordnete Hydrostateinrichtung stufenlos einstellbar ist. Außen am Bodenbereich 12 ist ein Ventilgehäuse 23 befestigt, welches der Ölversorgung für die Hydrostaten und für die Schmierung des Hydrostatmoduls dient.

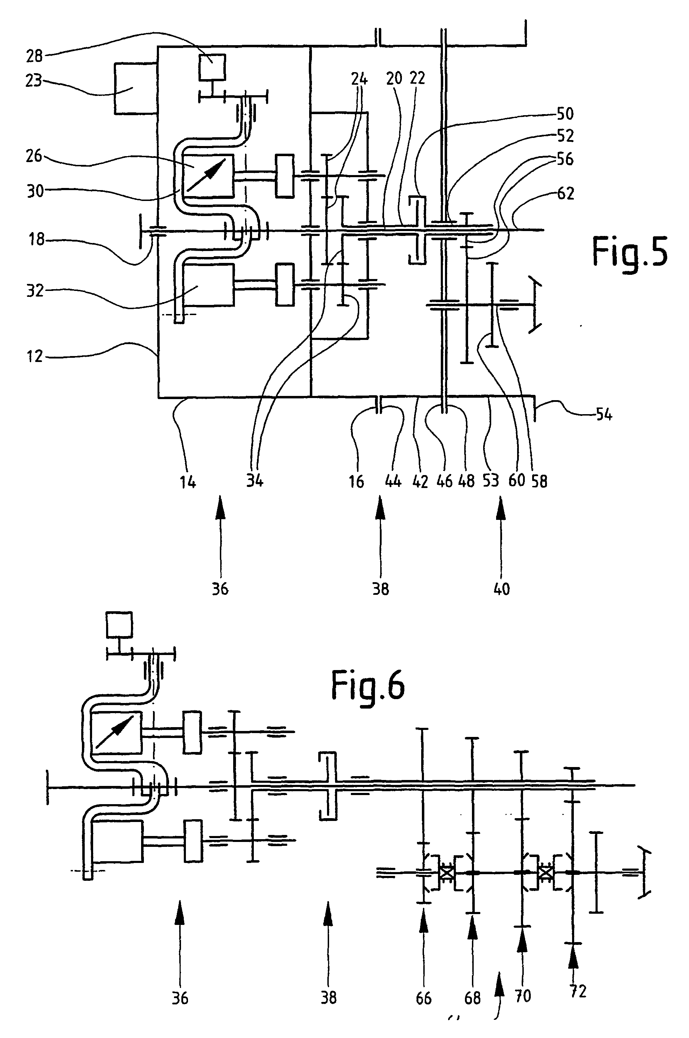

In dem Hydrostatgehäuse 10 ist eine Hydrostateinrichtung angeordnet, die in den Figuren 5 bis 12 angedeutet wurde. Die Hydrostateinrichtung ist in der nachveröffentlichten deutschen Patentanmeldung mit dem Aktenzeichen 100 47 402.0, auf deren Offenbarung Bezug genommen wird, im einzelnen beschrieben. Die Hydrostatmodule 36 der in den Figuren 5 bis 12 dargestellten Getriebesynthesen sind alle identisch. Bei ihnen wird die mechanische Leistung der Eingangswelle 18 einerseits an die Ausgangswelle 20 und andererseits über eine Räderkette 24 an einen als Verstellpumpe 26 ausgebildeten Hydrostaten abgegeben. Die Verstellpumpe 26 läßt sich durch eine Verstelleinrichtung 28 verschwenken und liefert über Hydraulikleitungen 30 Hydraulikflüssigkeit an einen als Konstantmotor 32 ausgebildeten Hydrostaten. Der Konstantmotor 32 treibt über eine Räderkette 34 die hohle Ausgangswelle 22 an, deren Drehzahl somit stufenlos einstellbar ist.

Die in Fig. 5 dargestellte Getriebesynthese besteht aus dem erwähnten Hydrostatmodul 36, einem Fahrkupplungsmodul 38 und einem Gruppenmodul 40. Bei dem Fahrkupplungsmodul 38 und dem Gruppenmodul 40 handelt es sich um konstante Getriebemodule, deren Übersetzungsverhältnisse feste Stufenwerte einnehmen und die keine stufenlose Drehzahlanpassung vornehmen können. Das Fahrkupplungsmodul 40 der Fig. 5 enthält ein Modulgehäuse 42 dessen Eingangsflansch 44 an dem Ausgangsflansch 16 des Hydrostatmoduls 36 und dessen Ausgangsflansch 46 an einem Eingangsflansch 48 des Gruppenmoduls 40 befestigt ist. Innerhalb des Modulgehäuses 42 ist eine durch ein nicht dargestelltes Kupplungspedal betätigbare Fahrkupplung 50 angeordnet, durch welche wahlweise die Ausgangshohlwelle 22 des Hydrostatmoduls 36 mit einer Eingangshohlwelle 52 des Gruppenmoduls 40 verbindbar ist.

Das Gehäuse 53 des in Fig. 5 dargestellten Gruppenmoduls 40 hat einen Ausgangsflansch 54 mit dem es an einem nicht dargestellten Differentialgehäuse befestigbar ist. Das Gruppenmodul 40 enthält lediglich eine nicht schaltbare Gruppe, die als Räderkette 56 ausgebildet ist und eine Differentialwelle 58 antreibt. Auf der Differentialwelle 58 ist ein weiteres Zahnrad 60 drehfest montiert, welches für einen nicht dargestellten Vorderradantrieb genutzt werden kann.

Ausgehend von der konstanten Ausgangswelle 20 des Hydrostatmoduls 36 erstreckt sich durch das Kupplungsmodul 38 und das Gruppenmodul 40 eine Nebenantriebswelle 62, die dem Antrieb eines nicht gezeigten Nebenantriebs, beispielsweise einer Zapfwelle, dient. Die Nebenantriebswelle 62 kann aus mehreren zusammensteckbaren Wellenabschnitten bestehen und verläuft innerhalb der Ausgangshohlwelle 22 des Hydrostatmoduls 36 und der Eingangshohlwelle 52 des Gruppenmoduls 40.

Die Getriebesynthese der Fig. 5 ist für Fahrzeuge mit kleinen Fahrleistungen, die vorwärts und rückwärts fahren und gegebenenfalls eine große Zapfwellenleistung benötigen (beispielsweise Radlader oder Schneepflug) geeignet. Dieses Getriebekonzept ist ein rein hydrostatischer Fahrantrieb.

Die anhand Fig. 5 beschriebene Getriebesynthese enthält drei Getriebemodule 36, 38, 40, die jeweils eigene Getriebegehäuse aufweisen und sich mittels ihrer Flansche 16, 44, 46, 48 miteinander verbinden lassen. Es kann jedoch auch vorteilhaft sein, wenigstens zwei der Getriebemodule in einem einzigen Gehäuse zusammenzufassen. Beispielsweise können die Gehäuse 42 und 53 ein gemeinsames Gehäuse bilden und die Flansche 46 und 48 entfallen. An Stelle der Flansche 46, 48 erstreckt sich dann in dem gemeinsamen Gehäuse eine Trennwand, die der Abstützung der Getriebewellen dient und die vorzugsweise derart abgedichtet ist, dass ein Schmiermitteldurchtritt unterbunden wird.

Die in Fig. 6 dargestellte Getriebesynthese hat das gleiche Hydrostatmodul 36 und das gleiche Fahrkupplungsmodul 38 wie die Getriebesynthese der Fig. 5. Lediglich das Gruppengetriebemodul 64 ist unterschiedlich und hat gemäß Fig. 6 vier Gruppen 66, 68, 70, 72. Die in Fig. 6 dargestellte Getriebesynthese stellt gleiche Vorwärts- und Rückwärtsgeschwindigkeiten zur Verfügung und ist für einfache Traktoren kleinerer Leistung geeignet. Dieses Getriebekonzept ist ebenfalls ein rein hydrostatischer Fahrantrieb.

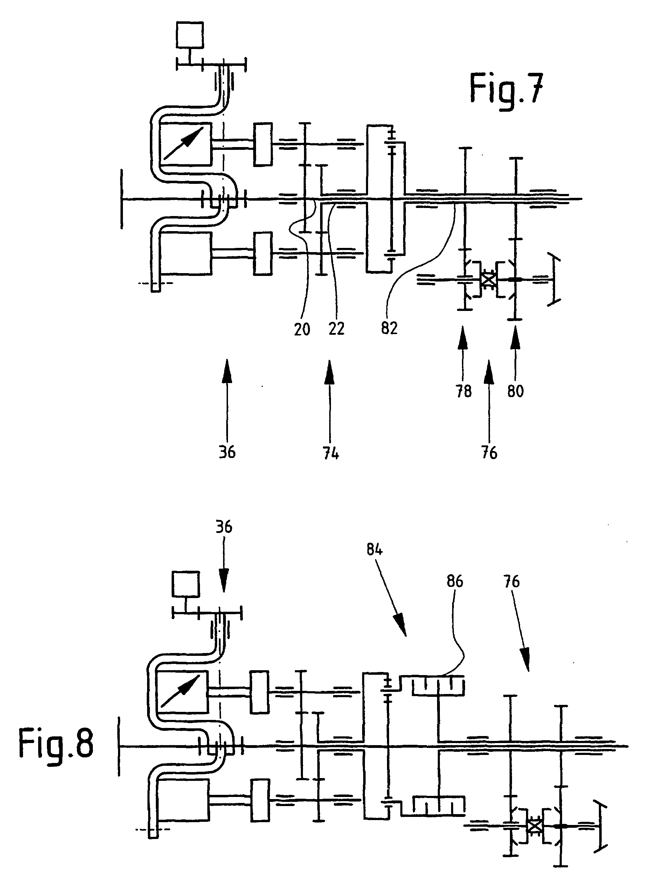

Die in Fig. 7 dargestellte Getriebesynthese besteht aus einem Hydrostatmodul 36 gemäß Fig. 5, einem Planetenmodul 74, der an die Stelle des Fahrkupplungsmoduls 38 der Fig. 5 tritt, und einem Gruppenmodul 76 mit zwei Schaltstufen 78, 80. Das Planetenmodul 74 enthält ein als Summengetriebe ausgebildetes Planetengetriebe, welches die Ausgangsleistung der hydrostatischen Ausgangswelle 22 und der konstanten Ausgangswelle 20 des Hydrostatmoduls 36 miteinander kombiniert und die Summenleistung über ihre Ausgangshohlwelle 82 an das Gruppenmodul 76 abgibt. Diese Anordnung ist für Fahrzeuge mit mittlerer Fahrleistung geeignet, bei denen gute Wirkungsgrade verlangt werden.

Bei den in den Figuren 7 bis 12 dargestellten Getriebesynthesen handelt es sich um hydrostatisch-mechanische Leistungsverzweigungsgetriebe, die eine Planetenwalze als konstantes Getriebemodul enthalten. Aus Fig. 2 geht der prinzipielle Aufbau eines Gehäuses für eine solches Planetengetriebemodul hervor. Das Gehäuse 73 nimmt eine Planetenwalze 75 auf und enthält einen Eingangsflansch 77 zur Befestigung an dem Ausgangsflansch 16 des Hydrostatmoduls 36 und einen Ausgangsflansch 79 zur Befestigung an dem Eingangsflansch 48 eines nachgeordneten Gruppenmoduls.

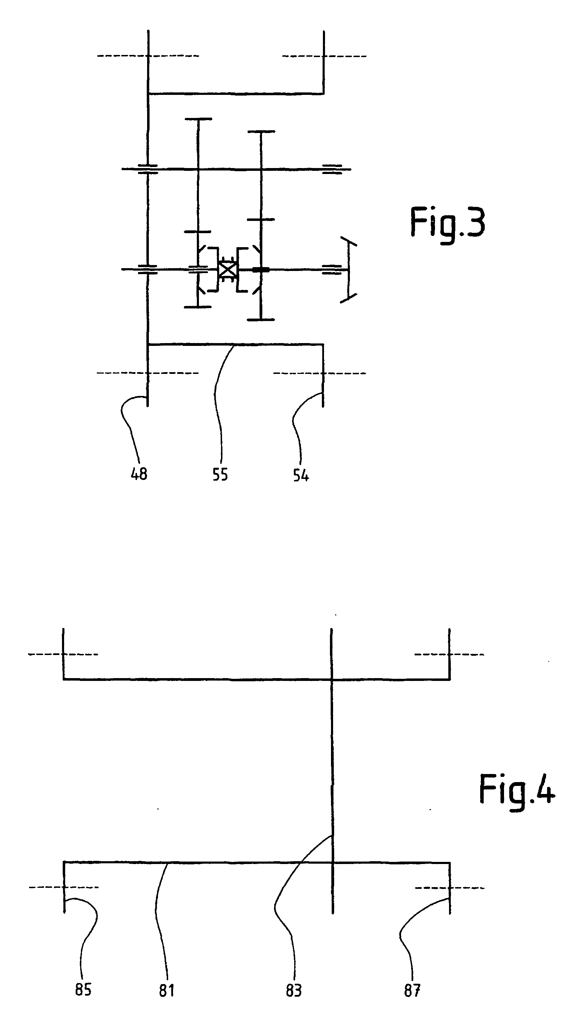

Die Fig. 3 zeigt ein Gruppenmodul dessen Gehäuse 55 einen Eingangsflansch 48 und einen Ausgangsflansch 54 aufweist. In dem Getriebegehäuse ist ein zweistufiges Gruppengetriebe angeordnet.

Die Gehäuse 73, 55 des Planetenmodus und des Gruppenmodus können zu einem gemeinsamen Gehäuseteil 81 zusammengefasst sein, wie es der Fig. 4 zu entnehmen ist. Das einstückige Gehäuseteil 81 ist an beiden Enden offen und in der Mitte durch eine Trennwand 83 unterteilt, die der Abstützung der in Fig. 4 nicht dargestellten Getriebewellen dient. Außerdem weist das Gehäuseteil 81 zwei Flansche auf, wobei der Eingangsflansch 85 mit einem Ausgangsflansch 16 des stufenlosen Getriebemoduls verbunden ist und der andere Flansch als Ausgangsflansch 87 mit einem Differential- oder mit einem Hinterachsgehäuse eines Fahrzeugs verbindbar ist.

Die Getriebesynthese der Fig. 8 unterscheidet sich von der in Fig. 7 dargestellten lediglich dadurch, dass dem Planetenmodul 84 eine Fahrkupplung 86 hinzugefügt ist, die es der Bedienungsperson ermöglicht, die Last am Fahrzeugabtriebsrad zu begrenzen oder zu dosieren. Auch ist es möglich, beim Reversieren Energie in der Fahrkupplung zu vernichten (power reverser).

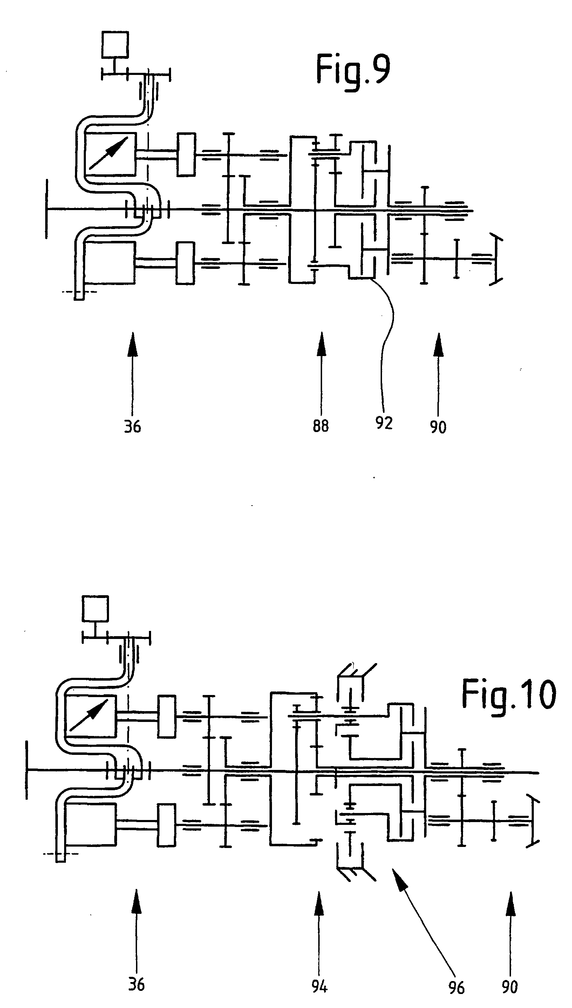

Die in Fig. 9 dargestellte Getriebesynthese besteht aus einem Hydrostatmodul 36 gemäß Fig. 5, einem Planetenmodul 88, der an die Stelle des Fahrkupplungsmoduls 38 der Fig. 5 tritt, und einem Gruppenmodul 90, dessen grundsätzlicher Aufbau dem Gruppenmodul 40 der Fig. 5 entspricht. Das Planetenmodul 88 enthält zwei Mode, zwischen denen unter Last durch Betätigung einer Modekupplung 92 umgeschaltet werden kann. Es liefert Vorund Rückwärtsfahrgeschwindigkeiten. Diese Anordnung ist für Fahrzeuge mit mittlerer Fahrleistung und höheren Geschwindigkeiten geeignet. Für Fahrzeug mit hohen Fahrleistungen kann das dargestellte, nicht schaltbare Gruppenmodul 90 durch ein Gruppengetriebe mit zwei und mehr Gruppen (wie in Fig. 6 oder 8 dargestellt) ersetzt werden.

Die Getriebesynthese der Fig. 10 unterscheidet sich von der in Fig. 9 dargestellten dadurch, dass in das Planetenmodul 94 neben den bei den Modes zusätzlich eine Reversiereinrichtung 96 für Rückfahrteinrichtung integriert ist. Diese Anordnung ist für Fahrzeuge mit hohen Fahrleistungen geeignet, bei denen die gewünschten Rückwärtsfahrgeschwindigkeiten deutlich kleiner sind als die Vorwärtsfahrgeschwindigkeiten.

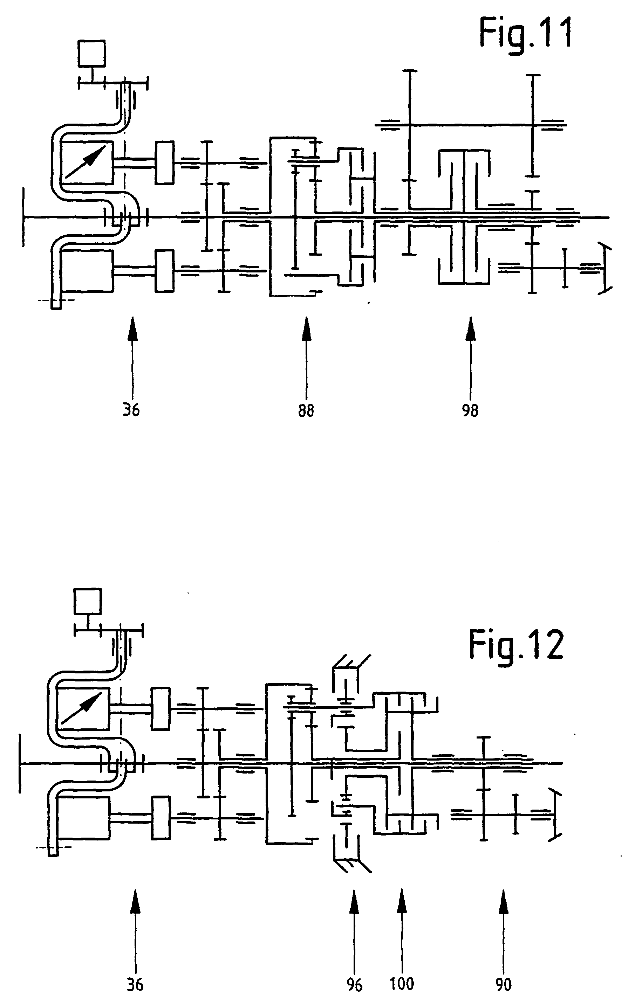

Die in Fig. 11 dargestellte Getriebesynthese unterscheidet sich von der in Fig. 8 dargestellten durch die Gestaltung des Gruppenmoduls 98. Dieser besteht aus einer Gruppe und einer integrierten unter Last schaltbaren Rückfahrteinrichtung, welche die Einstellung gleicher Vorwärts- und Rückwärtsfahrgeschwindigkeiten ermöglicht.

Die in Fig. 12 dargestellte Getriebesynthese ist der in Fig. 10 dargestellten ähnlich. Beide unterscheiden sich durch die Ausbildung des Planetenmoduls welches gemäß Fig. 12 zwei Mode mit integrierter Fahrkupplung 100 und Rückwärtsfahrteinrichtung aufweist. Diese Anordnung ist für hohe Antriebsleistungen geeignet.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die durch die Ansprüche definiert ist.

## Patentansprüche

1. Getriebesynthese mit einem stufenlos verstellbaren Getriebeteil (36) und einem konstanten Getriebeteil (38, 40, 64, 74, 76, 84, 88, 90, 94), wobei die Getriebeteile modular ausgebildet sind, wobei das stufenlose Getriebemodul (36) eine für sich abgeschlossene funktionsfähige Getriebeeinheit mit einem Verstellgetriebegehäuse bildet, welches zu wenigstens einer Seite offen ist und hier einen Flansch (16) enthält, wobei sich innerhalb des Flanschbereichs wenigstens eine stufenlos verstellbare Ausgangswelle (22) des stufenlosen Getriebemoduls (36) erstreckt und wobei der Flansch (16) der wahlweisen Befestigung konstanter Getriebemodule (38, 40, 64, 74, 76, 84, 88, 90, 94) unterschiedlicher Leistungsklassen und/oder unterschiedlicher Schaltstufen dient, **dadurch gekennzeichnet, dass** eine Getriebeeingangswelle (18) auf der dem Flansch (16) gegenüberliegenden Seite in das Verstellgetriebegehäuse eintritt und sich durch das stufenlose Getriebemodul (36) erstreckt, und
dass die Getriebeeingangswelle (18) als Eingangswelle sowohl für das stufenlose Getriebemodul (36) als auch für das konstante Getriebemodul (74, 84, 88, 94) dient.

2. Getriebesynthese nach Anspruch 1, **dadurch gekennzeichnet, dass** das konstante Getriebemodul räumlich dem stufenlosen Getriebemodul (36) nachgeordnet ist.

3. Getriebesynthese nach einem der Ansprüche 1 oder 2, **dadurch gekennzeichnet, dass** sich von der Eingangsseite zur Ausgangsseite jedes Getriebemoduls ein Wellenabschnitt erstreckt, dass die Wellenabschnitte im zusammengebauten Zustand der Getriebemodule miteinander fluchten und antriebsmäßig miteinander verbunden sind und dass die Wellenabschnitte als Eingangswelle für das jeweilige Getriebemodul und/oder als Antriebswelle für einen Nebenantrieb dienen.

4. Getriebesynthese nach einem der Ansprüche 1 bis 3, **dadurch gekennzeichnet, dass** sich durch den Flanschbereich des stufenlosen Getriebemoduls (36) wenigstens eine konstante Ausgangswelle (20) erstreckt, die mit einer Eingangswelle (18) des stufenlosen Getriebemoduls (36) antriebsmäßig verbunden ist, die mit dieser fluchtet oder parallel zu dieser verläuft und die dem Antrieb eines dem stufenlosen Getriebemodul (36) nachgeordneten konstanten Getriebemoduls (74, 84, 88, 94) dient.

5. Getriebesynthese nach einem der Ansprüche 1 bis 4, **dadurch gekennzeichnet, dass** wenigstens eine stufenlos verstellbare Ausgangswelle (22) des verstellbaren Getriebemoduls (36) parallel versetzt zur Getriebeeingangswelle (18) oder als Hohlwelle konzentrisch zu einer konstanten Ausgangswelle (20) des verstellbaren Getriebemoduls (36) verläuft.

6. Getriebesynthese nach einem der Ansprüche 1 bis 5, **dadurch gekennzeichnet, dass** das stufenlose Getriebemodul (36) zwei Hydrostaten (26, 32) mit parallel zueinander ausgerichteten Wellen enthält, dass ein Hydrostat eine Verstellpumpe (26) und der andere Hydrostat ein Konstantmotor (32) oder ein Verstellmotor ist und dass die Hydrostaten an einer Montageplatte befestigt sind.

7. Getriebesynthese nach einem der Ansprüche 1 bis 6, **dadurch gekennzeichnet, dass** das verstellbare Getriebemodul als Hydrostatmodul (36) ausgebildet ist und dass eine hydrostatisch angetriebene Ausgangswelle (22) des Hydrostatmoduls (36) als Hohlwelle ausgebildet ist, durch welche konzentrisch eine konstante Ausgangswelle (20) des Hydrostatmoduls (36) verläuft.

8. Getriebesynthese nach Anspruch 6 oder 7, **dadurch gekennzeichnet, dass** das Hydrostatmodulgehäuse, vorzugsweise auf seiner dem Flansch (16) abgewandten Stirnseite (12), ein Ventilgehäuse (23) enthält, welches der Ölversorgung der Hydrostateinheit (36) dient.

9. Getriebesynthese nach einem der Ansprüche 1 bis 8, **dadurch gekennzeichnet, dass** das konstante Getriebemodul (74, 84, 88, 94) ein Summierungsgetriebe enthält, welches die Ausgangsleistung einer stufenlos, insbesondere hydrostatisch, angetriebenen Ausgangswelle (22) des verstellbaren Getriebemoduls (36) mit der Ausgangsleistung einer konstanten Ausgangswelle (20) des verstellbaren Getriebemoduls (36) kombiniert, und dass das Summierungsgetriebegehäuse einen an den Flansch (16) des Verstellgetriebegehäuses angepassten Eingangsflansch (77) aufweist.

10. Getriebesynthese nach einem der Ansprüche 1 bis 9, **dadurch gekennzeichnet, daß** dem stufenlosen Getriebemodul (36) ein Planetengetriebemodul (74, 84, 88, 94) mit einem an den Flansch (16) des Verstellgetriebegehäuses angepassten Eingangsflansch (77) nachgeordnet ist, welches als Planetenwalze mit einer Summiereinheit ausgebildet ist.

11. Getriebesynthese nach einem der Ansprüche 1 bis 10, **dadurch gekennzeichnet, daß** in das konstante Getriebemodul, insbesondere in das Planetengetriebemodul ein, zwei, drei oder vier umschaltbare Übersetzungsverhältnisse und/oder eine Reversiereinheit und/oder eine Fahrkupplung integriert sind.

12. Getriebesynthese nach einem der Ansprüche 1 bis 11, **dadurch gekennzeichnet, dass** ein erstes konstantes Getriebemodul (38, 74, 84, 88, 94) einen seinem Eingangsflansch (44, 77) gegenüberliegenden Ausgangsflansch (46, 79) aufweist, an den wahlweise weitere konstante Getriebemodule (40, 64, 76, 90, 98) unterschiedlicher Leistungsklassen und/oder unterschiedlicher Leistungsstufen anschließbar sind.

13. Getriebesynthese nach einem der Ansprüche 1 bis 12, **dadurch gekennzeichnet, dass** ein weiteres konstantes Getriebemodul vorgesehen ist, welches als Gruppenmodul (40, 64, 76, 90) mindestens eine Gruppe enthält.

14. Getriebesynthese nach einem der Ansprüche 1 bis 13, **dadurch gekennzeichnet, dass** ein Gruppenmodul vorgesehen ist, das mit einem Eingangsflansch (48) an einen Ausgangsflansch (46) eines konstanten Getriebemoduls, insbesondere eines Summierungsgetriebegehäuses oder eines Planetengetriebemoduls, anschließbar ist und dessen Antriebswelle mit einer Ausgangswelle des konstanten Getriebemoduls antriebsmäßig verbunden ist.

15. Getriebesynthese nach Anspruch 14, **dadurch gekennzeichnet, dass** das Gruppenmodul einen im wesentlichen seinem Eingangsflansch (48) gegenüberliegenden Ausgangsflansch (54), der mit einem Differentialgehäuseflansch einer Fahrzeughinterachse verbindbar ist, und eine Ausgangswelle (58) aufweist, die mit einer Differentialwelle antriebsmäßig verbindbar ist.

16. Getriebesynthese nach einem der Ansprüche 1 bis 15, **dadurch gekennzeichnet, dass** das konstante Getriebemodul und das Gruppenmodul in einem gemeinsamen Gehäuseteil (81) angeordnet sind, dass das Gehäuseteil (81) an seinen gegenüberliegenden Enden einen Eingangsflansch (85) bzw. einen Ausgangsflansch (87) aufweist und dass das Gehäuseteil (81) in seinem mittleren Bereich eine Trennwand (83) aufweist.

17. Getriebesynthese nach einem der Ansprüche 1 bis 16, **dadurch gekennzeichnet, dass** zwischen wenigstens zwei Getriebeteilen (36, 38, 40, 64, 74, 76, 84, 88, 90, 94) eine Trennwand (83) ausgebildet ist, die einen Schmiermitteldurchtritt zwischen den beiden Getriebeteilen (36, 38, 40, 64, 74, 76, 84, 88, 90, 94) verhindert.

18. Getriebebaureihe mit Getrieben unterschiedlicher Leistungsklassen, deren Getriebe alle ein gleiches stufenlos verstellbares Getriebemodul (36) nach einem der Ansprüche 1 bis 8 und konstante Getriebemodule (38, 40, 64, 74, 76, 84, 88, 90, 94) nach einem der Ansprüche 9 bis 17 aufweisen.

19. Getriebebaureihe nach Anspruch 18, **dadurch gekennzeichnet, dass** das stufenlose Getriebemodul (36) so ausgelegt wird, dass es optimal auf die maximale Leistungsklasse der Getriebebaureihe angepasst ist.

20. Getriebebaureihe nach Anspruch 18 oder 19, **dadurch gekennzeichnet, dass** konstante Getriebemodule mit unterschiedlicher Schaltstufenzahl bereitgestellt werden, wobei für zunehmende Getriebenennleistungen Getriebemodule mit zunehmender Schaltstufenzahl gewählt werden.

## Claims

1. A transmission combination with a steplessly variable transmission component (36) and a constant transmission component (38, 40, 64, 74, 76, 84, 88, 90, 94), wherein the transmission components are built in modular manner, wherein the stepless transmission module (36) forms a self-contained functional transmission unit with a variable transmission housing which is open to at least one side and has a flange (16) there, wherein at least one steplessly variable output shaft (22) of the stepless transmission module (36) extends within the flange region, and wherein the flange (16) serves for selective attachment of constant transmission modules (3 8, 40, 64, 74, 76, 84, 88, 90, 94) of different power classes and/or different shift stages, **characterized in that** a transmission input shaft (18) enters into the variable transmission housing (18) on the side opposite the flange (16) and extends through the stepless transmission module (36) and **in that** the transmission input shaft (18) serves as an input shaft both for the stepless transmission module (36) and for the constant transmission module (74, 84, 88, 94).

2. A transmission combination according to claim 1, **characterized in that** the constant transmission module is arranged spatially after the stepless transmission module (36).

3. A transmission combination according to either of claims 1 and 2, **characterized in that** a shaft section extends from the input side to the output side of each transmission module, **in that** the shaft sections are aligned with one another in the assembled state of the transmission modules and are drivably coupled together, and **in that** the shaft sections serve as an input shaft for the respective transmission module and/or as a drive shaft for an auxiliary drive.

4. A transmission combination according to any of claims 1 to 3, **characterized in that** at least one constant output shaft (20) extends through the flange region of the stepless transmission module (36) and is drivably coupled to an input shaft (18) of the stepless transmission module (36) which is aligned with it or runs parallel to it, and which serves for the drive of a constant transmission module (74, 84, 88, 94) following after the stepless transmission module (36).

5. A transmission combination according to any of claims 1 to 4, **characterized in that** at least one steplessly variable output shaft (22) of the variable transmission module (36) is parallel offset from the transmission input shaft (18) or runs as a hollow shaft concentric with a constant output shaft (20) of the variable transmission module (36).

6. A transmission combination according to any of claims 1 to 5, **characterized in that** the stepless transmission module (36) includes two hydrostatic units (26, 32) with shafts aligned parallel to one another, **in that** one hydrostatic unit is a variable pump (26) and the other hydrostatic unit is a constant motor (32) or a variable motor, and **in that** the hydrostatic units are fixed on a mounting plate.

7. A transmission combination according to any of claims 1 to 6, **characterized in that** the variable transmission module is in the form of a hydrostatic module (36) and **in that** a hydrostatically driven output shaft (22) of the hydrostatic module (36) is in the form of a hollow shaft, through which a constant output shaft (20) of the hydrostatic module (36) runs concentrically.

8. A transmission combination according to claim 6 or 7, **characterized in that** the hydrostatic module housing includes a valve housing (23), preferably on its end side (12) remote from the flange (16), which serves for the oil supply to the hydrostatic unit (36).

9. A transmission combination according to any of claims 1 to 8, **characterized in that** the constant transmission module (74, 84, 88, 94) includes a summing gear which combines the output power of a steplessly, especially hydrostatically driven output shaft (22) of the variable transmission module (36) with the output power of a constant output shaft (20) of the variable transmission module (36), and **in that** the summing gear housing comprises an input flange (77) matching the flange (16) of the variable transmission housing.

10. A transmission combination according to any of claims 1 to 9, **characterized in that** a planetary transmission module (74, 84, 88, 94) with an input flange (77) matching the flange (16) of the variable transmission housing follows the stepless transmission module (36) and is formed as planetary rollers with a summing unit.

11. A transmission combination according to any of claims 1 to 10, **characterized in that** two, three or four selectable transmission ratios and/or a reversing unit and/or a drive clutch are integrated in the constant transmission module, especially in the planetary gear module.

12. A transmission combination according to any of claims 1 to 11, **characterized in that** a first constant transmission module (38, 74, 84, 88, 94) comprises an output flange (46, 79) opposite its input flange (44, 77), on which output flange further constant transmission modules (40, 64, 76, 90, 98) can selectively be attached, with different power classes and/or different power stages.

13. A transmission combination according to any of claims 1 to 12, **characterized in that** a further constant transmission module is provided and contains at least one range as a range module (40, 64, 76, 90).

14. A transmission combination according to any of claims 1 to 13, **characterized in that** a range module is provided and can be attached by an input flange (48) to an output flange (46) of a constant transmission module, especially a summing gear housing or a planetary gear module, and its drive shaft is drivably connected to an output shaft of the constant transmission module.

15. A transmission combination according to claim 14, **characterized in that** the range module comprises an output flange (54) essentially opposite its input flange (48), which output flange can be connected to a differential housing flange of a vehicle rear axle, and an output shaft (58) which can be drivably connected to a differential shaft.

16. A transmission combination according to any of claims 1 to 15, **characterized in that** the constant transmission module and the range module are arranged in a common housing part (81), **in that** the housing part (81) comprises an input flange (85) and an output flange (87) at its opposite ends respectively, and **in that** the housing part (81) has a partition (83) in its middle region.

17. A transmission combination according to any of claims 1 to 16, **characterized in that** a partition (83) is formed between at least two transmission parts (36, 38, 40, 64, 74, 76, 84, 88, 90, 94) and prevents passage of lubricant between the two transmission parts (36, 38, 40, 64, 74, 76, 84, 88, 90, 94).

18. A transmission series with transmissions of different power classes, whose transmissions all comprise a like steplessly variable transmission module (36) according to any of claims 1 to 8, and constant transmission modules (38, 40, 64, 74, 76, 84, 88, 90, 94) according to any of claims 9 to 17.

19. A transmission series according to claim 18, **characterized in that** the stepless transmission module (36) is so designed that it is optimally matched to the maximum power class of the transmission series.

20. A transmission series according to claim 18 or 19, **characterized in that** constant transmission modules with different shift stage numbers are provided, wherein transmission modules with increasing shift stage numbers are selected for increasing transmission nominal powers.

## Revendications

1. Synthèse de boîte de vitesses comportant une portion de boîte de vitesses réglable à étagement continu (36) et une portion de boîte de vitesses à étagement constant (38, 40, 64, 74, 76, 84, 88, 90, 94), les portions de boîte de vitesses étant modulables, le module de boîte de vitesses à étagement continu (36) constituant une unité de boîte de vitesses à capacité de fonctionnement déterminée en soi, comportant un carter de boîte réglable qui est ouvert sur au moins un côté, et qui contient à cet endroit une bride (16), à l'intérieur de la région de la bride s'étendant au moins un arbre sortant (22), réglable à étagement continu du module de boîte de vitesses à étagement continu (36), et la bride (16) servant à la fixation à volonté du module de boîte de vitesses à étagement constant (38, 40, 64, 74, 76, 84, 88, 90, 94) de différentes classes de rapports et/ou à différents étages de rapports, **caractérisée en ce qu'**un arbre d'entrée (18) de la boîte de vitesses pénètre dans le carter de la boîte de vitesses réglable du côté opposé à la bride (16), et s'étend à travers le module de boîte de vitesses à étagement continu, (36), et **en ce que** l'arbre d'entrée (18) de la boîte de vitesses sert d'arbre d'entrée aussi bien pour le module de boîte de vitesses à étagement continu (36) que pour le module de boîte de vitesses à étagement constant (74, 84, 88, 94).

2. Synthèse de boîte de vitesses selon la revendication 1, **caractérisée en ce que** le module de boîte de vitesses à étagement constant est disposé spatialement après le module de boîte de vitesses à étagement continu (36).

3. Synthèse de boîte de vitesses selon l'une ou l'autre des revendications 1 ou 2, **caractérisée en ce que**, depuis le côté entrée jusqu'au côté sortie de chaque module de boîte de vitesses, s'étend une section d'arbre, **en ce que** les sections d'arbres, à l'état assemblé du module de boîte de vitesses, sont alignées les unes avec les autres et reliées fonctionnellement les unes avec les autres, et **en ce que** les sections d'arbres servent d'arbres d'entrée pour chaque module de boîte de vitesses et/ou d'arbre d'entraînement pour un entraînement secondaire.

4. Synthèse de boîte de vitesses selon l'une quelconque des revendications 1 à 3, **caractérisée en ce que**, à travers la région de la bride du module de boîte de vitesses à étagement continu (36) s'étend au moins un arbre de sortie constante (20), qui est relié fonctionnellement avec un arbre d'entrée (18) du module de boîte de vitesses à étagement continu (36), qui est aligné avec celui-ci ou parallèle à celui-ci, et qui sert à l'entraînement d'un module de boîte de vitesses à étagement constant (74, 84, 88, 94) disposé après le module de boîte de vitesses à étagement continu (36).

5. Synthèse de boîte de vitesses selon l'une quelconque des revendications 1 à 4, **caractérisée en ce qu'**au moins un arbre de sortie réglable à étagement continu (22) du module de boîte de vitesses réglable (36) est décalé parallèlement à l'arbre d'entrée de la boîte de vitesses (18), ou s'étend en tant qu'arbre creux concentrique à un arbre de sortie constante (20) du module de boîte de vitesses réglable (36).

6. Synthèse de boîte de vitesses selon l'une quelconque des revendication 1 à 5, **caractérisée en ce que** le module de boîte de vitesses à étagement constant (36) comporte deux hydrostats (26, 32), à arbres orientés parallèlement l'un à l'autre, **en ce qu'**un hydrostat consiste en une pompe à déplacement (26), et l'autre hydrostat consiste en un moteur constant (32), ou en un moteur réglable, et **en ce que** les hydrostats sont fixés à une plaque de montage.

7. Synthèse de boîte de vitesses selon l'une quelconque des revendications 1 à 6, **caractérisée en ce que** le module de boîte de vitesses réglable consiste en un module hydrostatique (36), et **en ce qu'**un arbre de sortie à entraînement hydrostatique (22) du module hydrostatique (36) est réalisé sous forme d'un arbre creux, à travers lequel s'étend concentriquement un arbre de sortie constante (20) du module hydrostatique (36).

8. Synthèse de boîte de vitesses selon l'une ou l'autre des revendications 6 ou 7, **caractérisée en ce que** le carter du module hydrostatique comporte, de préférence sur son côté frontal (12) opposé à la bride (16), un carter de soupape (23), qui sert à l'alimentation en huile de l'unité hydrostatique (36).

9. Synthèse de boîte de vitesses selon l'une quelconque des revendications 1 à 8, **caractérisée en ce que** le module de boîte de vitesses à étagement constant (74, 84, 88, 94) comporte une boîte de vitesses à sommation qui combine le rapport de sortie d'un arbre de sortie (22) à étagement continu, en particulier à entraînement hydrostatique, du module de boîte de vitesses réglable (36), avec le rapport de sortie d'un arbre de sortie constante (20) du module de boîte de vitesses réglable (36), et **en ce que** le carter de la boîte de vitesses à sommation présente une bride d'entrée (77), adaptée à la bride (16) du carter de la boîte de vitesses réglable.

10. Synthèse de boîte de vitesses selon l'une quelconque des revendications 1 à 9, **caractérisée en ce que**, après le module de boîte de vitesses à étagement continu (36), est disposé un module de boîte de vitesses planétaire (74, 84, 88, 94) présentant une bride d'entrée (77) adaptée à la bride (16) du carter de la boîte de vitesses réglable, qui est réalisé sous forme d'un cylindre planétaire avec une unité de sommation.

11. Synthèse de boîte de vitesses selon l'une quelconque des revendications 1 à 10, **caractérisée en ce que**, dans le module de boîte de vitesses à étagement constant, en particulier dans le module de boîte de vitesses planétaire, sont intégrés un, deux, trois ou quatre rapports de conversion et/ou une unité réversible et/ou un embrayage.

12. Synthèse de boîte de vitesses selon l'une quelconque des revendications 1 à 11, **caractérisée en ce qu'**un premier module de boîte de vitesses à étagement constant (38, 74, 84, 88, 94) présente une bride de sortie (46, 79) située à l'opposé de sa bride d'entrée (44, 77), sur laquelle peuvent être montés à volonté d'autres modules de boîtes de vitesses à étagement constant (40, 64, 76, 90, 98), de différentes classes de rapports, et/ à différents étages de rapports.

13. Synthèse de boîte de vitesses selon l'une quelconque des revendications 1 à 12, **caractérisée en ce qu'**il est prévu un autre module de boîte de vitesses à étagement constant, qui comporte au moins un groupe sous forme d'un module de groupement (40, 64, 76, 90).

14. Synthèse de boîte de vitesses selon l'une quelconque des revendications 1 à 13, **caractérisée en ce qu'**il est prévu un module de groupement, qui peut être associé, par une bride d'entrée (48), avec une bride de sortie (46) d'un module de boîte de vitesses à étagement constant, en particulier d'un carter de boîte de vitesses à sommation ou d'un module de boîte de vitesses planétaire, et dont l'arbre d'entraînement est relié fonctionnellement à un arbre de sortie d'un module de boîte de vitesses à étagement constant.

15. Synthèse de boîte de vitesses selon la revendication 14, **caractérisée en ce que** le module de groupement présente une bride de sortie (54) située pratiquement à l'opposé de sa bride d'entrée (48), qui peut être réunie à une bride de carter de différentiel d'un axe arrière de véhicule, et un arbre de sortie (58) qui peut être relié fonctionnellement à un arbre de différentiel.

16. Synthèse de boîte de vitesses selon l'une quelconque des revendications 1 à 15, **caractérisée en ce que** le module de boîte de vitesses à étagement constant et le module de groupement sont logés dans une portion de carter commune (81), **en ce que** la portion de carter (81) comporte, à ses extrémités opposées, une bride d'entrée (85) et une bride de sortie (87), et **en ce que** la portion de carter (81) comporte, dans sa zone médiane, une cloison de séparation (83).

17. Synthèse de boîte de vitesses selon l'une quelconque des revendications 1 à 16, **caractérisée en ce que**, entre au moins deux portions de boîte de vitesses (36, 38, 40, 64, 74, 76, 84, 88, 90, 94), est montée une paroi de séparation (83) qui empêche un passage d'agents lubrifiants entre les deux portions de boîte de vitesses (36, 38, 40, 64, 74, 76, 84, 88, 90 94).

18. Chaîne de boîtes de vitesses comportant des boîtes de vitesses de différentes classes de rapports, dont les boîtes de vitesses comportent toutes un même module de boîte de vitesses réglable à étagement continu (36) selon l'une quelconque des revendications 1 à 8, et des modules de boîte de vitesses à étagement constant (38, 40, 64, 74, 76, 84, 88, 90, 94) selon l'une quelconque des revendications 9 à 17.

19. Chaîne de boîtes de vitesses selon la revendication 18, **caractérisée en ce que** le module de boîte de vitesses à étagement continu (36) est agencé de manière telle qu'il soit adapté de manière optimale à la classe de rapport maximal de la chaîne de boîtes de vitesses.

20. Chaîne de boîtes de vitesses selon l'une des revendications 18 ou 19, **caractérisée en ce que** des modules de boîtes de vitesses à étagement constant à différents nombres d'étages de rapports sont rendus disponibles, de sorte que sont sélectionnés, pour des rapports croissants de boîtes de vitesses, des modules de boîtes de vitesses présentant un nombre croissant d'étages de rapports.
